# EUROPÄISCHE PATENTSCHRIFT

(11) **EP 0 778 655 B1**
(45) Veröffentlichungstag und Bekanntmachung des Hinweises auf die Patenterteilung: **27.06.2001**
(21) Anmeldenummer: 96118969.3
(22) Anmeldetag: 27.11.1996
(51) Int. Cl.: H02K 23/18, H01R 39/38, H01R 39/44

(54) **Verstellvorrichtung für die Kohlebürsten an einem Elektromotor**
Displacing device for the carbon brushes in an electrical motor
Dispositif pour déplacer les balais de charbon dans un moteur électrique

(30) Priorität: 07.12.1995 DE 19545651
(43) Veröffentlichungstag der Anmeldung: 11.06.1997
(73) Patentinhaber: Marquardt GmbH, 78604 Rietheim-Weilheim (DE)
(72) Erfinder: Steidle, Alfons, 78549 Spaichingen (DE); Schäffeler, Alois, 78549 Spaichingen (DE)
(74) Vertreter: Patentanwälte Eisele, Otten, Roth & Dobler

(56) Entgegenhaltungen:
- EP-A- 0 236 254
- EP-A- 0 329 249
- EP-B- 0 208 137
- DE-A- 3 834 609
- DE-U- 8 908 646
- PATENT ABSTRACTS OF JAPAN vol. 11, no. 338 (E-553), 5.November 1987 & JP 62 118793 A (MATSUSHITA ELECTRIC IND CO LTD), 30.Mai 1987,

## Beschreibung

Die Erfindung betrifft eine Vorrichtung zur Verstellung der Kohlebürsten für einen reversiblen Elektromotor nach dem Oberbegriff des Patentanspruchs 1.

Elektrohandwerkzeuge, wie Bohrmaschinen, Schrauber o. dgl., sind häufig für einen Betrieb sowohl im Rechts- als auch im Linkslauf ausgestaltet, wobei am Elektrowerkzeug ein elektrischer Umschalter für die Polarität der Anschlüsse des Elektromotors angeordnet ist. Zur Verbesserung des Wirkungsgrads des Elektromotors in beiden Drehrichtungen kann bei der Umschaltung der Drehrichtung zusätzlich eine Verstellung der Kohlebürsten in die jeweils optimale Stellung vorgenommen werden.

Aus der EP-B-0 208 137 ist ein Elektrohandwerkzeug mit einem reversiblen Elektromotor bekannt, an dem eine Vorrichtung zur Verstellung der Kohlebürsten unter gleichzeitiger Umschaltung der Drehrichtung des Elektromotors angeordnet ist. Diese Vorrichtung besteht aus einer ortsfesten, am Stator des Elektromotors angesteckten Kontaktplatte und einem Träger, der seinerseits an der Kontaktplatte verschwenkbar ist. Am Träger sind die Bürstenhalter für die auf dem Kollektor des Elektromotors schleifenden Kohlebürsten befestigt. Der Träger ist mit einem Hohlraum ausgestaltet, in der mit den Kohlebürsten in elektrischer Verbindung stehende Schaltkontakte angeordnet sind. Die Kontaktplatte dient zur Aufnahme von Festkontakten, die wiederum mit den Anschlüssen für die Feldwicklungen des Elektromotors in Verbindung stehen. Die Festkontakte besitzen Kontaktflächen, die mit den Schaltkontakten als Gegenkontakte in einer wechselweisen Kontaktierung der Kohlebürsten bei Verschwenkung des Trägers zusammenwirken, womit eine Drehrichtungsumkehr des Elektromotors erfolgt.

Nachteilig bei der bekannten Vorrichtung zur Verstellung der Kohlebürsten und zur Umschaltung der Drehrichtung des Elektromotors ist, dass die Schalt- und Festkontakte aufwendig ausgestaltet sind. Weiter ist ein zusätzlicher Aufwand darin zu sehen, dass eine separate elektrische Verbindung zwischen den Kohlebürsten und den Schaltkontakten notwendig ist. Dies verteuert die Fertigung der Vorrichtung und kompliziert deren Montage. Außerdem ist aufgrund der zusätzlichen elektrischen Verbindungen und der komplexen Anordnung der Kontakte die Gefahr groß, dass Fehlschaltungen und Schaltungsausfälle auftreten. Damit ist die bekannte Vorrichtung nicht funktionssicher.

Weiter ist aus der EP-A-0 329 249 eine Bürstenhalterung für einen reversiblen Elektromotor an einem Elektrohandwerkzeug bekannt. Diese Bürstenhalterung besteht aus einer in achsialer Richtung, stationär am Kommutator angeordneten Kontaktplatte, die Aufnahmen für Kontaktstreifen aufweist, und einem bajonettartig drehbar an der Kontaktplatte angeordneten Träger. Der Träger besitzt wiederum Kammern für die Bürstenhalter, in denen sich die auf dem Kollektor des Elektromotors schleifenden Kohlebürsten befinden. Die Kontaktstreifen besitzen je einen Steckkontakt zum Anschluß an den Stator des Elektromotors und je zwei in achsialer Richtung elastische Kontaktteile. Die Kammer ist an der der Kontaktplatte zugewandten Seite offen, so dass die Bürstenhalter in der Art von Schaltkontakten direkt mit den Kontaktteilen der Kontaktstreifen als Festkontakte zur Drehrichtungsumkehr des Elektromotors bei Verschwenkung des Trägers kontaktieren.

Zwar kontaktieren bei dieser Bürstenhalterung die Bürstenhalter direkt mit den Kontaktteilen der Kontaktstreifen, jedoch ist hier nachteilig, dass die Bürstenhalter mit den Kontaktteilen in achsialer Richtung zur Kontaktgabe zusammenwirken. Beim Betrieb des Elektrohandwerkzeugs kann es zu Vibrationen oder Erschütterungen kommen, die aufgrund der achsialen Kontaktierung zum Prellen sowie zu Kontaktunsicherheiten führen. Somit besteht bei der Bürstenhalterung die Gefahr von Fehlschaltungen und Schaltungsausfällen, womit auch diese Vorrichtung nicht funktionssicher ist.

Außerdem sind beide bekannten Vorrichtungen nicht komplett vormontierbar. So können die Kohlebürsten erst bei der Montage am Elektromotor eingesetzt werden. Dabei gestaltet sich die Montage aufgrund mehrerer gleichzeitig zu montierender Einzelteile aufwendig. Ein nachträgliches Auswechseln der Kohlebürsten, die ein Verschleißteil am Elektromotor darstellen, ist nur durch Demontage und Zerlegen der Vorrichtung möglich. Folglich mangelt es diesen Vorrichtungen auch an Servicefreundlichkeit.

Der Erfindung liegt ausgehend von der EP-A-0 329 249 die Aufgabe zugrunde, eine Vorrichtung zur Verstellung der Kohlebürsten und zur Umschaltung der Drehrichtung eines Elektromotors derart auszugestalten, dass die Kontakt- und Funktionssicherheit verbessert ist. Zudem soll eine vereinfachte Montage der Vorrichtung am Elektromotor gewährleistet sein. Diese Aufgabe wird bei einer gattungsgemäßen Vorrichtung durch die kennzeichnenden Merkmale des Anspruchs 1 gelöst.

Weitere Ausgestaltungen der Erfindung sind Gegenstand der Unteransprüche.

Die Vorrichtung ist als kompaktes Bauteil ausgestaltbar, wobei das Bauteil aus einem Träger und einer Kontaktplatte besteht, die mittels Schnapp- und/oder Führungshaken zusammensetzbar sind. Dadurch ist das Kontaktsystem für den Umschalter durch das Bauteil gekapselt, so daß ein besonders guter Staubschutz, wie er insbesondere beim Einsatz in Elektrohandwerkzeugen erforderlich ist, erzielbar ist.

In einer weiteren Ausführung sind die Kontaktflächen der Festkontakte als elastisch ausgebildete Endabschnitte von Kontaktbändern ausgebildet. In der Vorrichtung befinden sich zwei Kontaktbänder mit je zwei Kontaktflächen, wobei ein Leitungssteg zur elektrischen Verbindung des Kontaktbandes zum jeweiligen Anschluß für die Feldwicklungen ungefähr mittig zwischen den Kontaktflächen vom Kontaktband abgeht. Es bietet sich an, das Kontaktband, den Leitungssteg und den Anschluß für die Feldwicklung als einstückiges Stanzteil auszubilden. Die Kontaktbänder können sich in einer Nut in der Kontaktplatte, die an der dem Träger zugewandten Seite angeordnet ist, befinden.

Es bietet sich an, die bei Verschwenkung des Trägers durch das Zusammenwirken der Schaltkontakte und der Festkontakte einstellbaren Schaltstellungen als Raststellungen auszubilden. Dazu befindet sich in der Kontaktplatte eine Rastkurve und an dem Bürstenhalter eine Rastfeder, die in achsialer Richtung elastisch ist. Die Rastfeder kann einstückig mit der freien Fläche des Bürstenhalters, beispielsweise als Stanzbiegeteil, ausgebildet sein.

Um eine einfache Möglichkeit zum Wechseln der Kohlebürsten zu gewährleisten, kann am Träger eine in radialer Richtung beidseitig offene Kammer zur Aufnahme der Bürstenhalter angeformt sein. Zur Befestigung der Bürstenhalter in der Kammer dient ein an der Kammer angeformter Haltehaken, der wiederum in der Art eines Schnappelementes in eine Ausnehmung am Bürstenhalter eingreift.

Mittels an dem Träger angeordneter Halteelemente können die Kohlebürsten zur Transportsicherung im Bürstenhalter zurückgehalten sein. Gleichzeitig dienen diese Halteelemente als Hilfe für die Montage der Vorrichtung am Elektromotor, da dann deren Aufstecken am Elektromotor möglich ist, ohne daß die Kohlebürsten stören. Nach der Montage der Vorrichtung ist das Halteelement entfernbar, beispielsweise indem es abgebrochen wird.

Es ist weiter vorteilhaft, wenn die Anschlüsse für die Feldwicklungen an der dem Träger abgewandten Seite der Kontaktplatte frei liegen, so daß beim Aufsetzen der Vorrichtung auf den Stator des Elektromotors die elektrische Verbindung zwischen den Anschlüssen und den Feldwicklungen herstellbar ist. Die Anschlüsse können auf unterschiedlichste Art, beispielsweise als Steckschneid-Klemme, Stecker, Drahtanschluß, Hülsenanschluß o. dgl. ausgebildet sein.

In noch weiterer Ausbildung ist an der dem Träger abgewandten Seite der Kontaktplatte eine Aufnahme für eine Funkentstördrossel angeordnet. Mittels einer Spange können in der Aufnahme Funkentstördrosseln mit verschiedenen Durchmessern gehalten werden. Die Funkentstördrosseln werden in Klemmkontakte eingesteckt, die wiederum mit den Anschlüssen in elektrischer Verbindung stehen. Um die Vorrichtung wahlweise mit oder ohne Funkentstördrossel herstellen zu können, ist die die Klemmkontakte überbrückende elektrische Verbindung durch ein Schneidwerkzeug o. dgl. nachträglich auftrennbar.

Die mit der Erfindung erzielten Vorteile bestehen insbesondere darin, daß das Kontaktsystem für den Umschalter einfach aufgebaut und damit kostengünstig herzustellen ist. Weiter ist die Kontaktsicherheit verbessert, so daß die Gefahr von Ausfällen vermindert und die Funktionssicherheit der Vorrichtung erhöht ist.

Bei der Vorrichtung nach der Erfindung handelt es sich um ein kompaktes Bauteil, das komplett vormontierbar ist. Das Bauteil läßt sich sicher transportieren, insbesondere ist eine Beschädigung durch Herausspringen der Kohlenbürsten während des Transports wirksam verhindert. Weiter läßt sich das Bauteil durch einfaches Aufstecken leicht am Elektromotor montieren, wodurch eine Ersparnis bei den Montagekosten resultiert. Zudem ist für Servicefälle auch ein Auswechseln der Kohlebürsten auf einfache Weise und ohne Demontage des Elektrogeräts möglich.

Ausführungsbeispiele der Erfindung sind in den Zeichnungen dargestellt und werden im folgenden näher beschrieben. Es zeigen
- Fig. 1: eine an einem Elektromotor angeordnete Vorrichtung zur Verstellung der Kohlebürsten in Seitenansicht,
- Fig. 2: die Draufsicht in Richtung gemäß dem Pfeil 36 auf die in Fig. 1 gezeigte Vorrichtung ohne Elektromotor,
- Fig. 3: die Draufsicht in Gegenrichtung zum Pfeil 36 aus Fig. 1 auf eine Vorrichtung in weiterer Ausführungsform, wobei der Elektromotor wiederum weggelassen ist,
- Fig. 4: die Vorrichtung zur Verstellung der Kohlebürsten in Explosiv-Darstellung,
- Fig. 5: die Seitenansicht eines Bürstenhalters für die Kohlebürste und
- Fig. 6: eine Darstellung wie in Fig. 2 gemäß der weiteren Ausführungsform, jedoch derart aufgebrochen, daß das Kontaktsystem sichtbar ist.

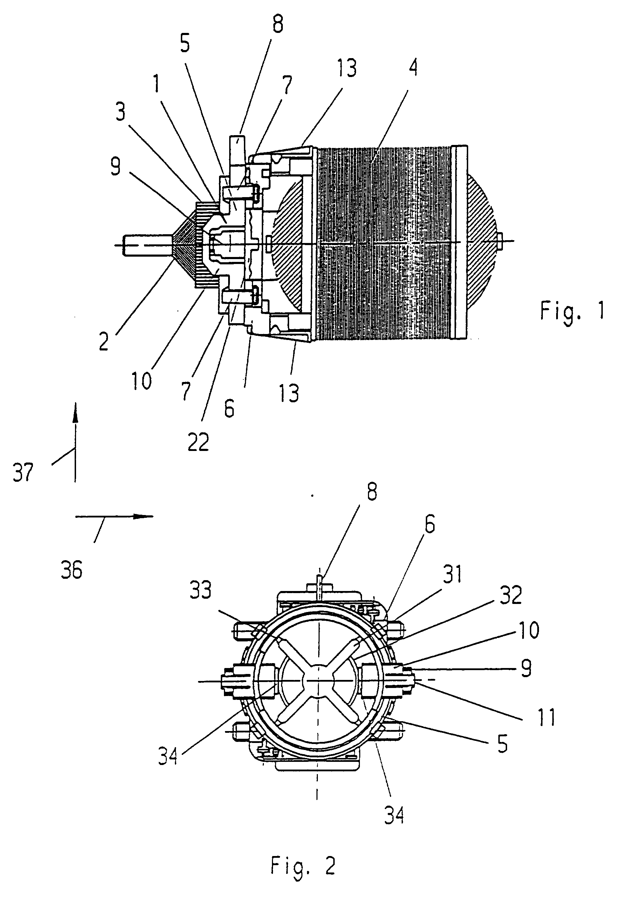

Elektrohandwerkzeuge für den Netzbetrieb, wie Bohrmaschinen, Schraubmaschinen o. dgl., besitzen in der Regel einen Universalmotor als Elektromotor, der oft für einen Betrieb sowohl im Rechts- als auch im Linkslauf ausgestaltet ist. Zur Umschaltung zwischen Rechts- und Linkslauf ist die Polarität der Anschlüsse für den Elektromotor zu vertauschen. Es kann bei einer derartigen Umschaltung gleichzeitig eine Verstellung der Kohlebürsten des Elektromotors vorgenommen werden, um die Kohlebürsten in eine optimale Stellung am Kollektor in Bezug auf die jeweilige Laufrichtung auszurichten. Eine erfindungsgemäße Vorrichtung zur Verstellung der Kohlebürsten mit integriertem Umschalter für einen derartigen reversiblen Elektromotor ist in Fig. 1 in Seitenansicht näher zu sehen, wobei der Elektromotor lediglich schematisch dargestellt ist.

Die Vorrichtung ist als flaches Bauteil 1 ausgebildet, das auf den Stator 4 des Elektromotors in achsialer Richtung 36 aufsetzbar ist. Am Stator 4 wird das Bauteil 1 beispielsweise zur Befestigung angeschraubt, mit Steckverbindungsteilen 13 fixiert oder in ähnlicher Weise befestigt. Das Bauteil 1 umgibt den Kollektor 3 am Rotor 2 des Elektromotors ringförmig in radialer Richtung 37.

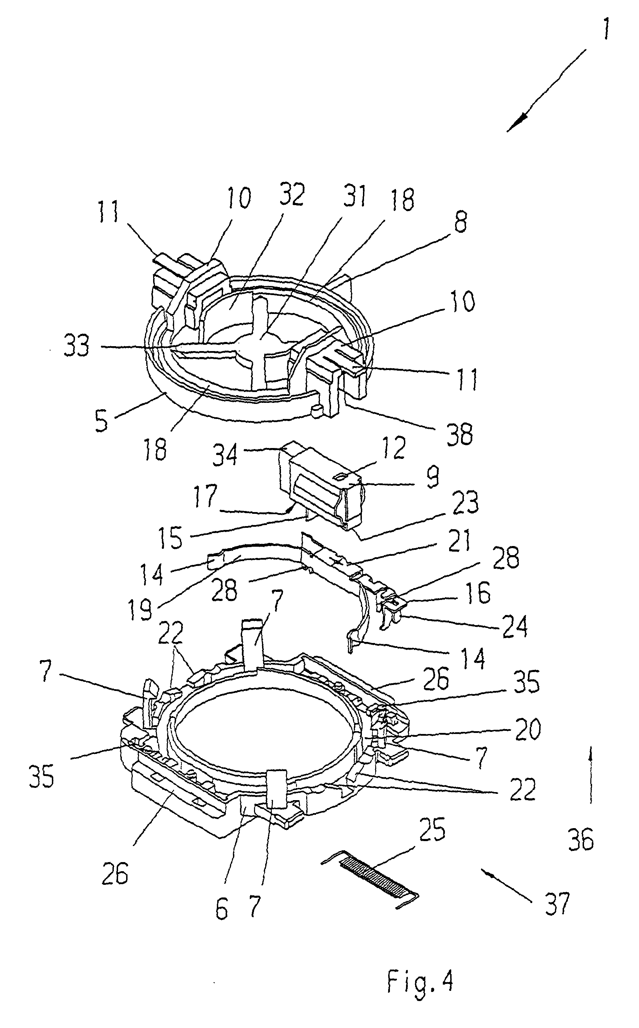

Das Bauteil 1 besteht aus einem Träger 5 und einer Kontaktplatte 6, wie man insbesondere der Fig. 4 entnehmen kann, in der das Bauteil 1 in explosionsartiger Perspektivdarstellung gezeigt ist. Der Träger 5 und die Kontaktplatte 6 sind mittels in achsialer Richtung 36 von der Kontaktplatte 6 abstehender Schnapphaken 7 oder sonstiger Führungshaken zum Bauteil 1 zusammensetzbar. Selbstverständlich können die Schnapphaken 7 auch umgekehrt am Träger 5 angebracht sein. Mittels eines Griffs 8 ist der Träger 5 auf der Kontaktplatte 6 verschwenkbar, während die Kontaktplatte 6 ortsfest am Stator 4 des Elektromotors befestigt ist, wie man anhand der Fig. 1 erkennt.

Der Träger 5 und die Kontaktplatte 6 bestehen aus Kunststoff und sind beispielsweise im Spritzgießverfahren hergestellt. Wie weiter aus Fig. 4 hervorgeht, sind am Träger 5 zwei einander diametral gegenüberstehende, in radialer Richtung 37 beidseitig offene Kammern 10 angeformt. Die Kammern 10 dienen zur Aufnahme jeweils eines Bürstenhalters 9, wobei in Fig. 4 nur ein Bürstenhalter 9 gezeigt ist. Dabei greift ein an der Kammer 10 angeformter Haltehaken 11 mittels eines Zapfens 38 in eine Ausnehmung 12 am Bürstenhalter 9 zu dessen Befestigung in der Kammer 10 ein. Im Bürstenhalter 9 ist wiederum die Kohlebürste 34 angeordnet, die unter Federdruck auf dem Kollektor 3 des Elektromotors schleift, wenn das Bauteil 1 am Elektromotor montiert ist. Da die Kammer 10 in radialer Richtung 37 offen ist, besteht somit die Möglichkeit, den Bürstenhalter 9 mitsamt der Kohlebürste 34 in eingebautem Zustand des Bauteils 1 am Elektromotor zu wechseln, ohne daß eine weitergehende Zerlegung des Bauteils 1 notwendig wäre.

Eine Verschwenkung des Trägers 5 mittels des Griffs 8 führt folglich zu einer Verschwenkung der Kohlebürsten 34 am Kollektor 3, wie man beispielsweise anhand der Fig. 1 erkennt. Gleichzeitig erfolgt bei der Verschwenkung des Trägers 5 eine Umschaltung zwischen den beiden Drehrichtungen des Elektromotors. Dazu befindet sich im Bauteil 1 weiter das Kontaktsystem für diesen Umschalter. Das Kontaktsystem besteht aus Festkontakten und Schaltkontakten, wobei die Festkontakte mit den Feldwicklungen am Stator 4 und die Schaltkontakte mit den Kohlebürsten 34 im Bürstenhalter 9 in elektrischer Verbindung stehen. Die Festkontakte wirken mit den Schaltkontakten als Gegenkontakte in einer wechselweisen Kontaktierung der Kohlebürsten 34 zur Drehrichtungsumkehr des Elektromotors bei Verschwenkung des Trägers 5 auf der Kontaktplatte 6 zusammen. Die Ausbildung des Kontaktsystems soll im folgenden näher erläutert werden.

Die Festkontakte bestehen aus zwei Kontaktbändern 19, von denen in Fig. 4 nur eines gezeigt ist. Das Kontaktband 19 besitzt als Kontaktflächen 14 der Festkontakte dienende, in radialer Richtung 37 elastisch ausgebildete Endabschnitte, so daß an jedem Kontaktband 19 jeweils zwei Kontaktflächen 14 befindlich sind. In der Kontaktplatte 6 befindet sich an der dem Träger 5 zugewandten Seite eine Nut 20, in der die zwei Kontaktbänder 19 einander gegenüberliegend angeordnet sind. An jedem Kontaktband 19 geht ungefähr mittig zwischen den beiden Kontaktflächen 14 ein Leitungssteg 21 ab. Der Leitungssteg 21 dient zur elektrischen Verbindung des Kontaktbandes 19 mit dem jeweiligen Anschluß 16 für die Feldwicklung am Stator 4 des Elektromotors. Vorteilhafterweise kann das Kontaktband 19, der Leitungssteg 21 und der Anschluß 16 für die Feldwicklung als einstückiges, metallisches Stanzteil ausgebildet sein.

Der in der Kammer 10 befindliche Bürstenhalter 9 ist derart am Träger 5 angeordnet, daß eine Fläche 17 des Bürstenhalters 9 der Kontaktplatte 6 zugewandt ist. Ein Teil 15 steht von dieser Fläche 17 ab. Dieser abstehende Teil 15 ragt in den Bereich der in der Nut 20 der Kontaktplatte 6 befindlichen Festkontakte hinein und dient als Schaltkontakt zur direkten Kontaktierung mit den Kontaktflächen 14 an den Kontaktbändern 19. Der am Bürstenhalter 9 befindliche abstehende Teil 15 steht vorzugsweise ungefähr senkrecht zur Fläche 17 und verläuft somit im wesentlichen in achsialer Richtung 36. Die Kontaktbänder 19 sind wiederum ungefähr parallel zum abstehenden Teil 15 und damit ebenfalls im wesentlichen in achsialer Richtung 36 in der Nut 20 verlaufend angeordnet, wobei die Kontaktflächen 14 an dem Kontaktband 19 eine Elastizität ungefähr in radialer Richtung 37 besitzen. Damit wirken die Schaltkontakte mit den Festkontakten im wesentlichen in radialer Richtung 37 zur Kontaktgabe zusammen. Dadurch erhält man vorteilhafterweise eine zuverlässige Kontaktgabe, selbst bei Erschütterungen u. dgl., die insbesondere beim Einsatz in Elektrowerkzeugen auftreten können.

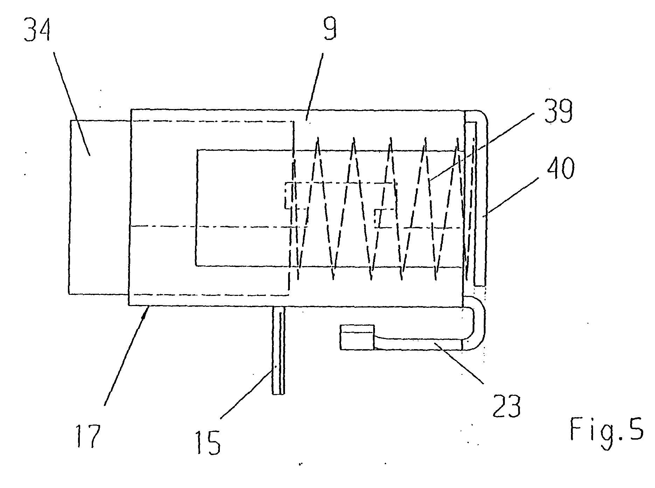

Besonders bevorzugterweise ist die Kammer 10 in achsialer Richtung 36, an der'der Kontaktplatte 6 zugewandten Seite ebenfalls offen ausgebildet. Die Fläche 17 stellt dann im Hinblick auf den Träger 5 eine freie Fläche 17 dar, die der Kontaktplatte 6 zugewandt ist. Der Bürstenhalter 9 ist aus Metall hergestellt, beispielsweise aus Kupfer, so daß die freie Fläche 17 aus elektrisch leitfähigem Material besteht. Der Teil 15 kann beispielsweise aus der freien Fläche 17 freigeschnitten und einstückig von der freien Fläche 17 abgebogen sein, wie insbesondere aus der Fig. 5 entnommen werden kann. Wie weiter aus der Fig. 5 hervorgeht, wird die elektrische Verbindung zwischen dem als Schaltkontakt wirkenden abstehenden Teil 15 und der Kohlebürste 34 über die Fläche 17 hergestellt. Zur Erzeugung der Kraft in radialer Richtung 37, mit der sich die Kohlebürste 34 am Kollektor 3 des Elektromotors anlegt, befindet sich im Bürstenhalter 9 eine auf die Kohlebürste 34 einwirkende Druckfeder 39, die sich an der Rückwand 40 des Bürstenhalters 9 abstützt.

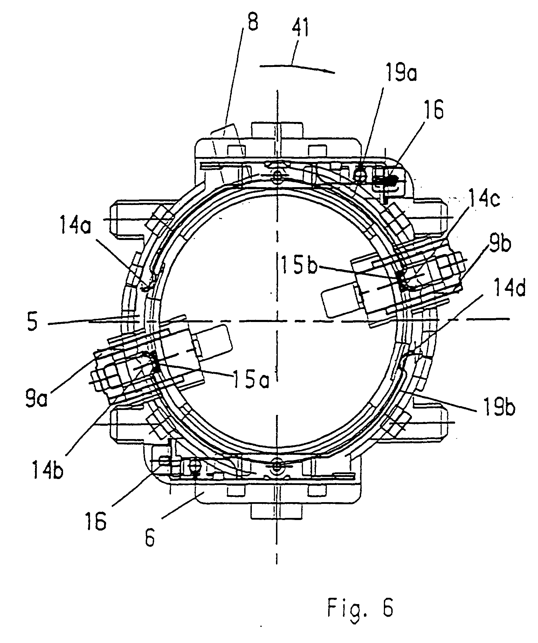

Die zum Umschalten der Drehrichtung des Elektromotors dienenden Schaltstellungen des Bauteils 1, die bei Verschwenkung des Trägers 5 auf der Kontaktplatte 6 durch das Zusammenwirken der abstehenden Teile 15 an den beiden Bürstenhaltern 9 als Schaltkontakte und der jeweiligen Kontaktflächen 14 der beiden Kontaktbänder 19 als Festkontakte einstellbar sind, gehen näher aus Fig. 6 hervor. Dort sind zur besseren Verdeutlichung die jeweils paarweise vorhandenen Bürstenhalter 9 mit den Bezugszeichen 9a, 9b, die abstehenden Teile 15 mit den Bezugszeichen 15a, 15b und die Kontaktbänder 19 mit den Bezugszeichen 19a, 19b näher bezeichnet. Die paarweisen Kontaktflächen 14 sind am Kontaktband 19a mit den Bezugszeichen 14a, 14c und am Kontaktband 19b mit 14b, 14d näher bezeichnet. In Fig. 6 ist eine erste Schaltstellung gezeigt, die beispielsweise dem Rechtslauf des Elektromotors entspricht. In der ersten Schaltstellung kontaktiert der Bürstenhalter 9a mittels des Teils 15a die Kontaktfläche 14b am Kontaktband 19b und der Bürstenhalter 9b mittels. des Teils 15b die Kontaktfläche 14c am Kontaktband 19a. Zum Einschalten der zweiten Schaltstellung wird der Griff 8 in Fig. 6 gemäß dem Pfeil 41 nach rechts verschwenkt, so daß der Bürstenhalter 9a die Kontaktfläche 14a am Kontaktband 19a und der Bürstenhalter 9b die Kontaktfläche 14d am Kontaktband 19b kontaktieren. Wie man sieht, findet in den beiden Schaltstellungen somit eine wechselweise Kontaktierung der Kontaktbänder 19a, 19b durch die Bürstenhalter 9a, 9b statt, womit die Polarität der Bürstenhalter 9a, 9b gegenüber den Anschlüssen 16 jeweils vertauscht wird.

Es ist nun weiter zweckmäßig, diese beiden Schaltstellungen als Raststellungen auszubilden. Wie in Fig. 4 gezeigt ist, sind die Raststellungen vorliegend durch das Zusammenwirken einer Rastkurve 22, die sich in der Kontaktplatte 6 befindet, mit einer Rastfeder 23, die mit dem Träger 5 in Verbindung steht, festgelegt. Bei der Rastfeder 23 handelt es sich vorzugsweise um ein in achsialer Richtung 36 elastisches Element an der Fläche 17 der Bürstenhalterung 9. Zweckmäßigerweise kann die Rastfeder 23 einstückig mit der Fläche 17 ausgebildet sein, wie insbesondere der Fig. 5 zu entnehmen ist.

Wie man anhand der Fig. 4 sieht, ist das aus den Kontaktflächen 14 und den abstehenden Teilen 15 bestehende Kontaktsystem durch das Bauteil 1 weitgehend gekapselt. Dabei deckt insbesondere ein absatzförmiger Rand 18 am Träger 5 das Kontaktsystem in der Ansicht gemäß Fig. 4 nach oben ab. Das in der Nut 20 befindliche Kontaktsystem ist weiter durch die Kontaktplatte 6 nach unten sowie seitlich abgedeckt. Somit ist ein guter Schutz vor Staubeinflüssen o. dgl. im Elektrohandwerkzeug gegeben.

Vorteilhafterweise ist der Anschluß 16 für die Feldwicklung des Stators 4 in einer Aufnahme 35 an der Kontaktplatte 6 angeordnet. Dabei kann die Aufnahme 35 derart ausgebildet sein, daß der Anschluß 16 an der dem Träger 5 abgewandten Seite der Kontaktplatte 6 frei liegt. Dadurch ist beim Aufsetzen des Bauteils 1 auf den Stator 4 des Elektromotors gleichzeitig die elektrische Verbindung zwischen den Anschlüssen 16 und den Feldwicklungen herstellbar. Die Anschlüsse 16 sowie die Gegenanschlüsse an den Feldwicklungen können hierzu in verschiedenster Form, beispielsweise als Steckanschlüsse, Drahtanschlüsse, Hülsenanschlüsse o. dgl. ausgebildet sein. Besonders bevorzugt aufgrund der Vereinfachung der Montage ist, die Anschlüsse 16 in der Art von Steckschneid-Klemmen 24 auszubilden.

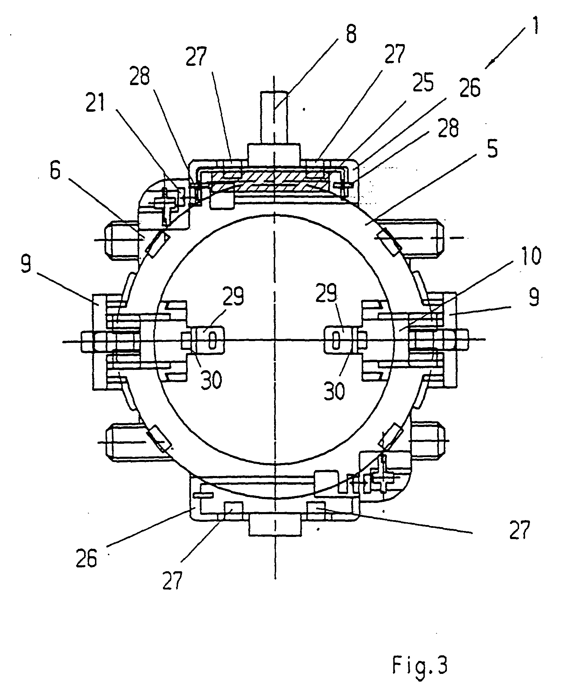

Der Leitungssteg 21 kann weiter derart ausgebildet sein, daß eine Kontaktgabe zu einer Funkentstördrossel 25 für den Elektromotor, wie sie in der Darstellung der Fig. 3 schematisch gezeigt ist, ermöglicht ist. Für die Funkentstördrossel 25 ist an der dem Träger 5 abgewandten Seite der Kontaktplatte 6 eine Aufnahme 26 angeordnet. Mit dieser Aufnahme 26 wirkt eine an der Kontaktplatte 6 befindliche Spange 27 zur Halterung der Funkentstördrossel 25 zusammen. Dadurch ist eine vom Durchmesser der Funkentstördrossel 25 unabhängige Halterung ermöglicht. In der Aufnahme 26 befinden sich mit den Anschlüssen 16. über den Leitungssteg 21 in elektrischer Verbindung stehende Klemmkontakte 28 zum Aufstecken der Funkentstördrossel 25. Die elektrische Überbrückung durch den Leitungssteg 21 zwischen den beiden Klemmkontakten 28 ist nachträglich mittels eines Schneidwerkzeugs, beispielsweise eines Schneidmessers, auftrennbar. Dadurch ist das Bauteil 1 wahlweise mit oder ohne Funkentstördrossel 25 ausrüstbar. Ist die Funkentstördrossel 25 eingesetzt, so wird die überbrückende Verbindung am Leitungssteg 21 aufgetrennt, da dann über die Funkentstördrossel 25 die elektrische Verbindung zu den Anschlüssen 16 hergestellt ist.

Im allgemeinen wird das Bauteil 1 separat hergestellt und erst beim Hersteller des Elektrowerkzeugs am Elektromotor angebracht. Zur Transportsicherung für die Kohlebürsten 34 ist im Bereich der Kammern 10 ein nachträglich entfernbares Halteelement angeordnet. Gleichzeitig dient dieses Halteelement als Hilfe für die Montage des Bauteils 1 am Elektromotor, da dadurch beim Aufsetzen des Bauteils 1 die Kohlebürsten 34 nicht mit Teilen des Elektromotors kollidieren können.

In einem ersten Ausführungsbeispiel gemäß Fig. 2 besteht das Halteelement aus sternförmig angeordneten Stegen 31, die am Träger 5 angespritzt sind. Zwischen den Stegen 31 sind Halteflächen 32 im Bereich der in den Kammern 10 befindlichen Bürstenhalter 9 befestigt, so daß die Kohlebürsten 34 im Bürstenhalter 9 zurückgehalten sind. Nach der Montage des Bauteils 1 am Elektromotor werden die Stege 31 an den Anspritzstellen 33 vom Träger 5 abgebrochen und entfernt, so daß die Kohlebürsten 34 aufgrund des einwirkenden Federdrucks der Druckfeder 39 sich am Kollektor 3 des Elektromotors anlegen. Gegebenenfalls können die Stege 31 bereits nach Einlegen der Bürstenhalter 9 mitsamt den Kohlebürsten 34 in die Kammern 10 an den Anspritzstellen 33 abgebrochen werden, da die Stege 31 in diesem Fall zur Transportsicherung noch abstützend am Träger 5 anliegen. Dann werden die Stege 31 mit den Halteflächen 32 bei der Montage des Bauteils 1 am Elektromotor von selbst aus dem Träger 5 herausgeschoben.

In einem weiteren Ausführungsbeispiel, das in Fig. 3 gezeigt ist, besteht das Halteelement aus einzelnen, an der Kammer 10 befindlichen Haltelappen 29, die mittels eines Zapfens 30 die Kohlebürste 34 in dem Bürstenhalter 9 zurückhalten. Nach der Montage werden die Haltelappen 29 abgebrochen, so daß die Kohlebürsten 34 unter der Einwirkung einer Druckfeder 39 o. dgl. aus der Bürstenhalterung 9 heraustreten und sich am Kollektor 3 des Elektromotors anlegen.

Die Erfindung ist nicht auf die beschriebenen und dargestellten Ausführungsbeispiele beschränkt. So kann die erfindungsgemäße Vorrichtung zur Verstellung der Kohlebürsten nicht nur bei Elektrowerkzeugen sondern auch an sonstigen Geräten mit Elektromotoren, beispielsweise in Küchenarbeitsgeräten o. dgl. Verwendung finden.

### Bezugszeichen-Liste:

- 1:: Bauteil
- 2:: Rotor
- 3:: Kollektor
- 4:: Stator
- 5:: Träger
- 6:: Kontaktplatte
- 7:: Schnapphaken
- 8:: Griff
- 9:: Bürstenhalter
- 10:: Kammer
- 11:: Haltehaken
- 12:: Ausnehmung (in Bürstenhalter)
- 13:: Steckverbindungsteil
- 14:: Kontaktfläche
- 15:: abstehender Teil (der freien Fläche)
- 16:: Anschluß (für Feldwicklung)
- 17:: Fläche (an Bürstenhalter, dem Träger zugewandt)
- 18:: absatzförmiger Rand
- 19:: Kontaktband
- 20:: Nut
- 21:: Leitungssteg
- 22:: Rastkurve
- 23:: Rastfeder
- 24:: Steckschneid-Klemme
- 25:: Funkentstördrossel
- 26:: Aufnahme (für Funkentstördrossel)
- 27:: Spange
- 28:: Klemmkontakt
- 29:: Haltelappen
- 30:: Zapfen (an Haltelappen)
- 31:: Steg
- 32:: Haltefläche
- 33:: Anspritzstelle
- 34:: Kohlebürste
- 35:: Aufnahme (für Anschluß zur Feldwicklung)
- 36:: achsiale Richtung
- 37:: radiale Richtung
- 38:: Zapfen (an Haltehaken)
- 39:: Druckfeder
- 40:: Rückwand (des Bürstenhalters)
- 41:: Pfeil (entsprechend Verschwenkrichtung)

## Patentansprüche

1. Vorrichtung zur Verstellung der Kohlebürsten für einen reversiblen Elektromotor, insbesondere für ein Elektrohandwerkzeug, mit einem verschwenkbaren Träger (5), an dem Bürstenhalter (9) für die auf dem Kollektor (3) des Elektromotors schleifenden Kohlebürsten (34) und mit den Kohlebürsten (34) in elektrischer Verbindung stehende Schaltkontakte angeordnet sind, und mit einer ortsfesten Kontaktplatte (6) zur Aufnahme von Festkontakten, die mit den Feldwicklungen des Elektromotors in elektrischer Verbindung stehen, wobei die Bürstenhalter (9) derart auf dem Träger (5) angeordnet sind, dass eine Fläche (17) des Bürstenhalters (9) der Kontaktplatte (6) zugewandt ist, und wobei ein Teil (15) dieser Fläche (17) in den Bereich der Festkontakte in der Kontaktplatte (6) als Schaltkontakt zur direkten Kontaktierung der Festkontakte hineinragt, so dass die Festkontakte mit den Schaltkontakten als Gegenkontakte in einer wechselweisen Kontaktierung der Kohlebürsten (34) zur Drehrichtungsumkehr des Elektromotors bei Verschwenkung des Trägers (5) zusammenwirken, dadurch gekennzeichnet, dass der als Schaltkontakt wirkende Teil (15) der Fläche (17) des Bürstenhalters (9) von der Fläche (17) ungefähr senkrecht abstehend ausgebildet und in achsialer Richtung (36) verlaufend angeordnet ist, und dass die Kontaktfläche (14) des Festkontaktes ungefähr parallel zum Schaltkontakt, in achsialer Richtung (36) verlaufend angeordnet ist, so dass die Schaltkontakte mit den Kontaktflächen (14) der Festkontakte in radialer Richtung (37) zur Kontaktgabe zusammenwirken.

2. Vorrichtung zur Verstellung der Kohlebürsten nach Anspruch 1, dadurch gekennzeichnet, dass der als Schaltkontakt wirkende Teil (15) der Fläche (17) des Bürstenhalters (9) einstückig von der Fläche (17) abgebogen ausgebildet ist.

3. Vorrichtung zur Verstellung der Kohlebürsten nach Anspruch 1 oder 2, dadurch gekennzeichnet, dass die Fläche (17) aus elektrisch leitfähigem Material besteht und dass die Fläche (17) als freie Fläche am Träger (5) ausgebildet ist.

4. Vorrichtung zur Verstellung der Kohlebürsten nach Anspruch 1, 2 oder 3, dadurch gekennzeichnet, dass der Träger (5) und die Kontaktplatte (6) zu einem auf den Stator (4) des Elektromotors in achsialer Richtung (36) aufsetzbaren, den Kollektor (3) ringförmig in radialer Richtung (37) umgebenden flachen Bauteil (1) mittels Schnapp- und/oder Führungshaken (7) zusammensetzbar ist.

5. Vorrichtung zur Verstellung der Kohlebürsten nach Anspruch 4, dadurch gekennzeichnet, dass das aus den Festkontakten und den Schaltkontakten bestehende Kontaktsystem durch das Bauteil (1) gekapselt ist, indem ein absatzförmiger Rand (18) am Träger (5) die Kontaktplatte (6) abdeckt.

6. Vorrichtung zur Verstellung der Kohlebürsten nach einem der Ansprüche 1 bis 5, dadurch gekennzeichnet, dass die Kontaktflächen (14) der Festkontakte eine Elastizität in radialer Richtung (37) besitzen.

7. Vorrichtung zur Verstellung der Kohlebürsten nach einem der Ansprüche 1 bis 6, dadurch gekennzeichnet, dass die Kontaktflächen (14) der Festkontakte durch elastisch ausgebildete Endabschnitte von Kontaktbändern (19) gebildet sind, wobei die Kontaktbänder (19) mit Anschlüssen (16) für die Feldwicklungen in elektrischer Verbindung stehen.

8. Vorrichtung zur Verstellung der Kohlebürsten nach einem der Ansprüche 1 bis 7, dadurch gekennzeichnet, dass in der Kontaktplatte (6) an der dem Träger (5) zugewandten Seite eine Nut (20) zur Aufnahme der Kontaktbänder (19) befindlich ist, wobei die Kontaktfläche (14) des Festkontakts in der Nut (20) verlaufend angeordnet ist.

9. Vorrichtung zur Verstellung der Kohlebürsten nach Anspruch 7 oder 8, dadurch gekennzeichnet, dass zwei Kontaktbänder (19) mit je zwei Kontaktflächen (14) in der Nut (20) angeordnet sind, wobei ein Leitungssteg (21) zur elektrischen Verbindung des Kontaktbandes (19) mit dem jeweiligen Anschluß (16) für die Feldwicklung ungefähr mittig zwischen den Kontaktflächen (14) vom Kontaktband (19) abgeht und wobei das Kontaktband (19), der Leitungssteg (21) und der Anschluß (16) für die Feldwicklung als einstückiges Stanzteil ausgebildet ist.

10. Vorrichtung zur Verstellung der Kohlebürsten nach einem der Ansprüche 1 bis 9, dadurch gekennzeichnet, dass die bei Verschwenkung des Trägers (5) durch das Zusammenwirken der Schaltkontakte und der Festkontakte einstellbaren Schaltstellungen als Raststellungen ausgebildet sind, wobei die Raststellungen durch das Zusammenwirken einer Rastkurve (22) in der Kontaktplatte (6) mit einer Rastfeder (23) am Träger (5) festgelegt sind.

11. Vorrichtung zur Verstellung der Kohlebürsten nach Anspruch 10, dadurch gekennzeichnet, dass als Rastfeder (23) ein in achsialer Richtung (36) elastisches Element an der Fläche (17) der Bürstenhalterung (9) angeordnet ist.

12. Vorrichtung zur Verstellung der Kohlebürsten nach Anspruch 11, dadurch gekennzeichnet, dass das als Rastfeder (23) dienende elastische Element einstückig mit der Fläche (17) ist.

13. Vorrichtung zur Verstellung der Kohlebürsten nach einem der Ansprüche 1 bis 12, dadurch gekennzeichnet, dass am Träger (5) eine in radialer Richtung (37) beidseitig offene Kammer (10) zur Aufnahme des Bürstenhalters (9) angeformt ist.

14. Vorrichtung zur Verstellung der Kohlebürsten nach Anspruch 13, dadurch gekennzeichnet, dass die Kammer (10) in achsialer Richtung (36) an der der Kontaktplatte (6) zugewandten Seite offen ausgebildet ist.

15. Vorrichtung zur Verstellung der Kohlebürsten nach Anspruch 13 oder 14, dadurch gekennzeichnet, dass ein an der Kammer (10) angeformter Haltehaken (11) in eine Ausnehmung (12) am Bürstenhalter (9) zu dessen Befestigung eingreift.

16. Vorrichtung zur Verstellung der Kohlebürsten nach einem der Ansprüche 1 bis 15, dadurch gekennzeichnet, dass mit dem Träger (5) nachträglich entfernbare Halteelemente derart zusammenwirken, dass die Kohlebürsten (34) zur Transportsicherung und als Hilfe für die Montage des Trägers (5) am Elektromotor in dem Bürstenhalter (9) zurückgehalten sind.

17. Vorrichtung zur Verstellung der Kohlebürsten nach Anspruch 16, dadurch gekennzeichnet, dass es sich bei den Halteelementen um an der Kammer (10) angeformte Haltelappen (29) handelt.

18. Vorrichtung zur Verstellung der Kohlebürsten nach Anspruch 16, dadurch gekennzeichnet, dass es sich bei den Halteelementen um am Träger (5) abgestützte Stege (31) mit daran befestigten Halteflächen (32) handelt.

19. Vorrichtung zur Verstellung der Kohlebürsten nach einem der Ansprüche 1 bis 18, dadurch gekennzeichnet, dass die Anschlüsse (16) für die Feldwicklungen an der dem Träger (5) abgewandten Seite der Kontaktplatte (6) frei liegen, so dass bei Aufsetzen der Kontaktplatte (6) auf den Stator (4) des Elektromotors die elektrische Verbindung zwischen den Anschlüssen (16) und den Feldwicklungen herstellbar ist.

20. Vorrichtung zur Verstellung der Kohlebürsten nach Anspruch 19, dadurch gekennzeichnet, dass die Anschlüsse (16) als Steckschneid-Klemme (24), Stecker, Draht oder Hülse ausgebildet sind.

21. Vorrichtung zur Verstellung der Kohlebürsten nach einem der Ansprüche 1 bis 20, dadurch gekennzeichnet, dass an der dem Träger (5) abgewandten Seite der Kontaktplatte (6) eine Aufnahme (26) für eine Funkentstördrossel (25) angeordnet ist, wobei mit der Aufnahme (26) eine an der Kontaktplatte (6) befindliche Spange (27) für die vom Durchmesser der Funkentstördrossel (25) unabhängige Halterung zusammenwirkt.

22. Vorrichtung zur Verstellung der Kohlebürsten nach Anspruch 21, dadurch gekennzeichnet, dass in der Aufnahme (26) mit den Anschlüssen (16) in elektrischer Verbindung stehende Klemmkontakte (28) zum Aufstecken der Funkentstördrossel (25)
angeordnet sind, wobei eine überbrückende elektrische Verbindung zwischen den Klemmkontakten (28) zur wahlweisen Ausführung mit oder ohne Funkentstördrossel (25) durch ein Schneidwerkzeug nachträglich auftrennbar ist.

## Claims

1. Device for adjusting the carbon brushes for a reversible electric motor, in particular for a hand-held power tool, with a pivotable carrier (5) on which brush holders (9) for the carbon brushes (34) rubbing on the collector (3) of the electric motor and switch contacts electrically connected to the carbon brushes (34) are arranged, and with a stationary contact plate (6) for receiving fixed contacts which are electrically connected to the field windings of the electric motor, wherein the brush holders (9) are arranged on the carrier (5) in such a way that one face (17) of the brush holder (9) faces the contact plate (6), and wherein a portion (15) of this face (17) projects into the region of the fixed contacts in the contact plate (6) as switch contact for direct contacting of the fixed contacts, so the fixed contacts cooperate with the switch contacts as countercontacts in alternate contacting of the carbon brushes (34) for reversal of the direction of rotation of the electric motor during pivoting of the carrier (5), characterised in that the portion (15) of the face (17) of the brush holder (9) acting as switch contact is designed so as to project approximately perpendicularly from the face (17) and is arranged so as to extend in the axial direction (36), and in that the contact face (14) of the fixed contact is arranged so as to extend approximately parallel to the switch contact (15) in the axial direction (36), so the switch contacts cooperate with the contact faces (14) of the fixed contacts in the radial direction (37) in order to make a contact.

2. Device for adjusting carbon brushes according to claim 1, characterised in that the portion (15) of the face (17) of the brush holder (9) acting as switch contact is an integral piece bent from the face (17).

3. Device for adjusting carbon brushes according to claim 1 or 2, characterised in that the face (17) consists of electrically conductive material and in that the face (17) is formed as a free face on the carrier (5).

4. Device for adjusting carbon brushes according to claim 1, 2 or 3, characterised in that the carrier (5) and the contact plate (6) can be combined by means of latch and/or guide hooks (7) to form a flat component (1) which can be placed on the stator (4) of the electric motor in the axial direction (36) and surrounds the collector (3) in the radial direction (37) in the manner of a ring.

5. Device for adjusting carbon brushes according to claim 4, characterised in that the contact system consisting of the fixed contacts and the switch contacts is encapsulated by the component (1) in that a shoulder-like rim (18) on the carrier (5) covers the contact plate (6).

6. Device for adjusting carbon brushes according to one of claims 1 to 5, characterised in that the contact faces (14) of the fixed contacts have an elastic force in the radial direction (37).

7. Device for adjusting carbon brushes according to one of claims 1 to 6, characterised in that the contact faces (14) of the fixed contacts are formed by resiliently formed end portions of contact strips (19), wherein the contact strips (19) are electrically connected to connections (16) for the field windings.

8. Device for adjusting carbon brushes according to one of claims 1 to 7, characterised in that a groove (20) for receiving the contact strips (19) is located in the contact plate (6) on the side facing the carrier (5), wherein the contact face (14) of the fixed contact is arranged so as to extend in the groove (20).

9. Device for adjusting carbon brushes according to claim 7 or 8, characterised in that two contact strips (19) with two contact faces (14) in each case are arranged in the groove (20), wherein a conductor web (21) for electrically connecting the contact strip (19) to the respective connection (16) for the field winding projects approximately centrally between the contact faces (14) of the contact strip (19) and wherein the contact strip (19), the conductor web (21) and the connection (16) for the field winding are designed as an integral punched part.

10. Device for adjusting carbon brushes according to one of claims 1 to 9, characterised in that the switch positions produced when the carrier (5) is pivoted owing to the cooperation between the switch contacts and the fixed contacts, are designed as lock-in positions, wherein the lock-in positions are determined by the cooperation of a lock-in curve (22) in the contact plate (6) with a catch spring (23) on the carrier (5).

11. Device for adjusting carbon brushes according to claim 10, characterised in that an element which is resilient in the axial direction (36) is arranged on the face (17) of the brush holding device (9) as catch spring (23).

12. Device for adjusting carbon brushes according to claim 11, characterised in that the resilient element functioning as catch spring (23) is formed as one piece with the face (17).

13. Device for adjusting carbon' brushes according to one of claims 1 to 12, characterised in that a chamber (10) for receiving the brush holder (9) and which is open on both sides in the radial direction (37) is attached to the carrier (5).

14. Device for adjusting carbon brushes according to claim 13, characterised in that the chamber (10) is designed so as to be open at the side facing the contact plate (6) in the axial direction (36).

15. Device for adjusting carbon brushes according to claim 13 or 14, characterised in that a retaining hook (11) attached to the chamber (10) engages in a recess (12) on the brush holder (9) in order to secure it.

16. Device for adjusting carbon brushes according to one of claims 1 to 15, characterised in that holding elements which can subsequently be removed cooperate with the carrier (5) in such a way that the carbon brushes (34) are kept back in the brush holder (9) for protection during transport and to assist with assembly of the carrier (5) on the electric motor.

17. Device for adjusting carbon brushes according to claim 16, characterised in that the holding elements are holding tabs (29) attached to the chamber (10).

18. Device for adjusting carbon brushes according to claim 16, characterised in that the holding elements are webs (31) resting on the carrier (5) with holding faces (32) attached thereto.

19. Device for adjusting carbon brushes according to one of claims 1 to 18, characterised in that the connections (16) for the field windings are exposed at the side of the contact plate (6) remote from the carrier (5), so when the contact plate (6) is placed on the stator (4) of the electric motor the electrical connection can be made between the connections (16) and the field windings.

20. Device for adjusting carbon brushes according to claim 19, characterised in that the connections (16) are designed as insulation-piercing connector (24), plug connector, wire or bush.

21. Device for adjusting carbon brushes according to one of claims 1 to 20, characterised in that a mount (26) for a radio interference suppression coil (25) is arranged on the side of the contact plate (6) remote from the carrier (5), wherein a clasp (27) located on the contact plate (6) for the holding device, which is independent of the diameter of the radio interference suppression coil (25), cooperates with the mount (26).

22. Device for adjusting carbon brushes according to claim 21, characterised in that clamping contacts (28) electrically connected to the connections (16) for attaching the radio interference suppression coil (25) are arranged in the mount (26), wherein a bridging electrical connection between the clamping contacts (28), for optional construction with or without radio interference suppression coil (25), can be subsequently severed by a cutting tool.

## Revendications

1. Dispositif pour régler les balais de charbon pour un moteur électrique réversible, en particulier pour un outil électrique à main, comportant un support (5) pouvant pivoter, sur lequel sont agencés des supports de balais (9) pour les balais de charbon (34) en contact avec le collecteur (3) du moteur électrique, et des contacts de commutation reliés électriquement aux balais de charbon (34), et comportant une plaque de contact fixe (6) pour recevoir des contacts fixes, qui sont en liaison électrique avec les enroulements de champ du moteur électrique, les supports de balais (9) étant agencés sur le support (5) de sorte qu'une surface (17) du support de balais (9) est en regard de la plaque de contact (6), et une partie (15) de cette surface (17) pénètre dans la zone des contacts fixes sur la plaque de contact (6) comme contact de commutation pour le contact direct des contacts fixes, de sorte que les contacts fixes coopèrent avec les contacts de commutation comme contre-contacts lors d'un contact alternatif des balais de charbon (34) pour l'inversion du sens de rotation du moteur électrique lors du pivotement du support (5),
caractérisé en ce que la partie (15), agissant comme contact de commutation, de la surface (17) du support de balais (9) est réalisée en s'écartant de façon sensiblement perpendiculaire de la surface (17) et est agencée en s'étendant en direction axiale (36), et en ce que la surface de contact (14) du contact fixe est agencée en s'étendant sensiblement parallèlement au contact de commutation en direction axiale (36) de sorte que les contacts de commutation coopèrent avec les surfaces de contact (14) des contacts fixes en direction radiale (37) pour fournir le contact.

2. Dispositif pour régler les balais de charbon selon la revendication 1,
caractérisé en ce que la partie (15), agissant comme contact de commutation, de la surface (17) du support de balais (9) est réalisée en une pièce en étant cintrée à partir de la surface (17).

3. Dispositif pour régler les balais de charbon selon la revendication 1 ou 2,
caractérisé en ce que la surface (17) est constituée d'une matière électriquement conductrice et en ce que la surface (17) est réalisée comme surface libre sur le support (5).

4. Dispositif pour régler les balais de charbon selon la revendication 1, 2 ou 3,
caractérisé en ce que le support (5) et la plaque de contact (6) peuvent être assemblés en une pièce (1) plate, entourant en direction radiale (37), de façon annulaire, le collecteur (3), et pouvant être mise en place sur le stator (4) du moteur électrique en direction axiale (36), au moyen de crochets de guidage et/ou à enclenchement (7).

5. Dispositif pour régler les balais de charbon selon la revendication 4,
caractérisé en ce que le système de contact constitué des contacts fixes et des contacts de commutation est encapsulé par la pièce (1) en ce qu'un bord en saillie (18) sur le support (5) recouvre la plaque de contact (6).

6. Dispositif pour régler les balais de charbon selon une des revendications 1 à 5,
caractérisé en ce que les surfaces de contact (14) des contacts fixes possèdent une élasticité en direction radiale (37).

7. Dispositif pour régler les balais de charbon selon une des revendications 1 à 6,
caractérisé en ce que les surfaces de contact (14) des contacts fixes sont formées par des tronçons d'extrémité, réalisés de façon élastique, de bandes de contact (19), les bandes de contact (19) étant en liaison électrique avec des raccords (16) pour les enroulements de champ.

8. Dispositif pour régler les balais de charbon selon une des revendications 1 à 7,
caractérisé en ce que, sur la plaque de contact (6), sur la face en regard du support (5), il est prévu une rainure (20) pour recevoir les bandes de contact (19), la surface de contact (14) du contact fixe étant agencée en s'étendant dans la rainure (20).

9. Dispositif pour régler les balais de charbon selon la revendication 7 ou 8,
caractérisé en ce que deux bandes de contact (19) avec à chaque fois deux surfaces de contact (14) sont agencées dans la rainure (20), une âme conductrice (21) pour la liaison électrique de la bande de contact (19) avec le raccord respectif (16) pour l'enroulement de champ partant de la bande de contact (19) approximativement de façon centrale entre les surfaces de contact (14) et la bande de contact (19), l'âme conductrice (21) et le raccord (16) pour l'enroulement de champ étant réalisés comme pièce estampée intégrale.

10. Dispositif pour régler les balais de charbon selon une des revendications 1 à 9,
caractérisé en ce que les positions de commutation réglables lors du pivotement du support (5) par la coopération des contacts de commutation et des contacts fixes sont réalisées comme positions de crantage, les positions de crantage étant déterminées sur le support (5) par coopération d'une came (22) sur la plaque de contact (6) avec un ressort (23).

11. Dispositif pour régler les balais de charbon selon la revendication 10,
caractérisé en ce que, comme ressort (23), il est agencé, sur la surface (17) du support de balais (9), un élément élastique en direction axiale (36).

12. Dispositif pour régler les balais de charbon selon la revendication 11,
caractérisé en ce que l'élément élastique servant de ressort (23) est en une pièce avec la surface (17).

13. Dispositif pour régler les balais de charbon selon une des revendications 1 à 12,
caractérisé en ce que, sur le support (5), il est formé une chambre (10) ouverte des deux côtés en direction radiale (37) pour recevoir le support de balais (9).

14. Dispositif pour régler les balais de charbon selon la revendication 13,
caractérisé en ce que la chambre (10) est réalisée en étant ouverte sur le côté en regard de la plaque de contact (6) en direction axiale (36).

15. Dispositif pour régler les balais de charbon selon la revendication 13 ou 14,
caractérisé en ce qu'un crochet de maintien (11) formé sur la chambre (10) s'engage dans un évidement (12) sur le support de balais (9) pour sa fixation.

16. Dispositif pour régler les balais de charbon selon une des revendications 1 à 15,
caractérisé en ce que des éléments de maintien, pouvant être ultérieurement écartés, coopèrent avec le support (5), de sorte que les balais de charbon (34) pour la sécurité du transport et comme aide pour le montage du support (5) sont retenus sur le moteur électrique dans le support de balais (9).

17. Dispositif pour régler les balais de charbon selon la revendication 16,
caractérisé en ce que, concernant les éléments de maintien, il s'agit de pattes de maintien (29) formées sur la chambre (10).

18. Dispositif pour régler les balais de charbon selon la revendication 16,
caractérisé en ce que, concernant les éléments de maintien, il s'agit d'âmes (31) s'appuyant sur le support (5) ayant des surfaces de maintien (32) qui y sont fixées.

19. Dispositif pour régler les balais de charbon selon une des revendications 1 à 18,
caractérisé en ce que les raccords (16) pour les enroulements de champ sont disposés de façon libre sur la face, opposée au support (5), de la plaque de contact (6), de sorte que la liaison électrique entre les raccords (16) et les enroulements de champ peut être effectuée lors de la mise en place de la plaque de contact (6) sur le stator (4) du moteur électrique.

20. Dispositif pour régler les balais de charbon selon la revendication 19,
caractérisé en ce que les raccords (16) sont réalisés comme bande de connexion enfichable (24), connecteur, fil métallique ou douille.

21. Dispositif pour régler les balais de charbon selon une des revendications 1 à 20,
caractérisé en ce que, sur la face, opposée au support (5), de la plaque de contact (6), il est agencé un récepteur (26) pour une self antiparasite (25), une agrafe (27) se trouvant sur la plaque de contact (6) coopérant avec le récepteur (26) pour le maintien indépendant du diamètre de la self antiparasite (25).

22. Dispositif pour régler les balais de charbon selon la revendication 21,
caractérisé en ce que, dans le récepteur (26), sont agencés des contacts de serrage (28) reliés électriquement aux raccords (16) pour l'enfichage de la self antiparasite (25), une liaison électrique de pontage entre les contacts de serrage (28), pour une réalisation au choix avec ou sans self antiparasite (25), pouvant être ultérieurement interrompue par un outil de coupe.
